# EUROPEAN PATENT APPLICATION

(11) **EP 3 086 173 A1**
(43) Date of publication of application: **26.10.2016**
(21) Application number: 14871629.3
(22) Date of filing: 16.12.2014
(51) Int. Cl.: G03B 5/00, G03B 3/02, G02B 7/02

(54) **APPARATUS FOR ALIGNING AND ASSEMBLING LENS OPTICAL AXIS OF CAMERA MODULE AND METHOD FOR ALIGNING AND ASSEMBLING LENS OPTICAL AXIS USING SAME**

(30) Priority: 19.12.2013 KR 20130159153; 09.06.2014 KR 20140069736; 11.06.2014 KR 20140070555
(71) Applicant: ISC Co., Ltd., Seongnam-si, Gyeonggi-do 462-120 (KR)
(72) Inventor: KANG, Sung Kwan, Yongin-si Gyeonggi-do 448-791 (KR)
(74) Representative: Raynor, Stuart Andrew
(86) International application number: PCT/KR2014/012375
(87) International publication number: WO 2015/093808

(57) **Abstract**

Disclosed are an apparatus for aligning lens optical axes of a camera module and assembling the camera module and a method therefor that can effectively adjust the optical axis of a lens. The disclosed apparatus for aligning lens optical axes of a camera module and assembling the camera module comprises: a support block configured to support a substrate on which an image sensor is installed; a displacement sensor configured to detect a tilted state of the image sensor to generate sensor tilt information; a lens holder configured to be fastened to the substrate by means of three or more bolts; a bolt fastener configured to be driven to tighten the three or more bolts to fasten the lens holder to the substrate; and a controller configured to control the bolt fastener, wherein the controller is controlled according to the sensor tilt information to control the bolt fastener to fasten the three or more bolts with different fastening levels while controlling an axis of the support block, so as to correct the tilted state of the image sensor. Using the apparatus for aligning lens optical axes of a camera module and assembling the camera module having a such a configuration, it is possible to rapidly and precisely adjust and assemble the optical axis of a lens, thereby implementing a high-performance camera module ensuring a bright and clear captured image.

## Description

### [Technical Field]

The present invention relates to an apparatus and method for assembling a camera module for monitoring front and back directions or automatic driving of a vehicle, and more particularly, to an apparatus and method for aligning lens optical axes of a camera module and assembling the camera module, which are improved for efficiently aligning optical axes of lenses provided in the camera module and assembling the camera module.

### [Background Art]

In recent years, a camera is mounted increasingly more in a vehicle to guide parking or monitor surroundings of the vehicle. In addition, demands have increased for mounting a monitoring camera for performing automatic driving functions such as determining whether to maintain a lane during driving, road sign recognition, and the like.

Demands for mounting cameras in a vehicle increase for the purposes of, for example, monitoring performance of automatic driving function such as lane maintaining, road sign recognition, and the like.

In general, a camera mounted in a vehicle in this manner may be supplied as a single module type in which an image sensor, a lens, etc., are assembled, and at this point, when optical axes between the lens and the image sensor are not precisely aligned, it is difficult to implement a desired high-performance function of the camera.

Accordingly, in order to implement a high-performance camera module with high reliability, the optical axes of the lenses should be precisely adjusted during assembly of the camera module, and therefore there is a demand for an apparatus and method for assisting to effectively and smoothly assemble the camera module with capability of precise adjustment.

### [Disclosure]

### [Technical Problem]

The present invention is directed to providing an apparatus and method for aligning lens optical axes of a camera module and assembling the camera module that are improved for efficiently assembling the camera module while precisely adjusting the optical axes of the lenses and a camera module thus manufactured.

### [Technical Solution]

One aspect of the present invention provides an apparatus for aligning lens optical axes of a camera module and assembling the camera module, includes: a support block configured to support a substrate on which an image sensor is installed; a displacement sensor configured to detect a tilted state of the image sensor to generate sensor tilt information; a lens holder configured to be fastened to the substrate by means of three or more bolts; a bolt fastener configured to be driven to tighten the three or more bolts to fasten the lens holder to the substrate; and a controller configured to control the bolt fastener, wherein the controller is controlled according to the sensor tilt information to control the bolt fastener to tighten the three or more bolts with different tightening levels while controlling an axis of the support block, in order to correct the tilted state of the image sensor.

Another aspect of the present invention provides a method for aligning lens optical axes of a camera module and assembling the camera module, includes: setting a substrate on which an image sensor is installed and to which a lens holder is fastened at a support block, wherein the lens holder is fastened to the substrate such that an active region of the image sensor is exposed through a holder hole; measuring a plurality of points of the active region of the image sensor exposed through the holder hole using a displacement sensor to generate sensor tilting information for correcting tilting of the image sensor, wherein a controller controls the support block according to the sensor tilting information; inserting a lens barrel in which the lens is installed to the lens holder to which an adhesive agent has been applied after the measuring; and controlling the lens barrel to align a center of the lens with a reference point of the image sensor after the inserting, wherein the controller is driven to control the lens barrel according to the lens image and the lens image is an image of a test chart detected by the image sensor through the lens.

Still another aspect of the present invention provides a method for aligning lens optical axes of a camera module and assembling the camera module, includes: heating a camera module, wherein the camera module includes a substrate on which an image sensor is installed, a lens barrel in which a lens is installed, and a lens holder coupled between the substrate and the lens barrel, and the lens barrel is coupled to the lens holder by an adhesive agent cured by heating; setting the heated camera module to the support block; measuring a plurality of points on an end portion of the lens barrel of the heated camera module using a displacement sensor to generate barrel tilting information, wherein the controller is driven to control the support block according to the barrel tilting information; and determining, by the controller, whether a misalignment of an optical axis of the camera module is generated via a determination image after the measuring, wherein the determination image is an image of a test chart detected by the image sensor.

Yet another aspect of the present invention provides a camera module manufactured by the method for aligning lens optical axes of a camera module and assembling the camera module.

### [Advantageous Effect]

According to the apparatus and method for aligning the lens optical axes of the camera module and assembling the camera module having the configuration, a high-performance camera module can be effectively implemented because rapidly assembling is possible while precisely adjusting the optical axes of the lens.

### [Description of Drawings]

FIG. 1 is an exploded perspective view showing a structure of a camera module that is adjusted by an apparatus for aligning lens optical axes of a camera module and assembling the camera module according to an embodiment of the present invention;
FIGS. 2 and 3 are views showing an apparatus for aligning lens optical axes of a camera module and assembling the camera module according to an embodiment of the present invention;
FIG. 4 is a view showing a process of measuring a tilted state of an image sensor using a displacement sensor of the apparatus for aligning the lens optical axes of the camera module and assembling the camera module shown in FIGS. 2 and 3, for image sensor tilting correction;
FIG. 5 is a view showing a cross-sectional structure of the camera module shown in FIG. 1;
FIG. 6 is a view for describing a process of measuring and correcting a tilted state of an image sensor using a displacement sensor of the apparatus for aligning the lens optical axes of the camera module and assembling the camera module shown in FIGS. 2 and 3, for lens barrel tilting correction;
FIG. 7 is a view for describing a process of measuring and matching a reference point of an image sensor and a reference point of a test chart using a vision camera of the apparatus for aligning the lens optical axes of the camera module and assembling the camera module shown in FIGS. 2 and 3, for lens barrel tilting correction;
FIG. 8 is a view for describing a process of matching a center point of a lens provided in a lens barrel of the apparatus for aligning the lens optical axes of the camera module and assembling the camera module shown in FIGS. 2 and 3 and a reference point of an image sensor, for lens barrel tilting correction;
FIG. 9 is a flowchart showing a method for aligning lens optical axes of a camera module and assembling the camera module according to an embodiment of the present invention for performing lens barrel tilting correction;
FIG. 10 is a view for describing a process of measuring a tilted state of a lens barrel after heating an adhesive agent using a displacement sensor of the apparatus for aligning lens optical axes of a camera module and assembling the camera module shown in FIGS. 2 and 3, for adhesive agent curing tilting correction;
FIG. 11 is a view for describing a process of matching a center point of a lens provided in a lens barrel of the apparatus for aligning lens optical axes of a camera module and assembling the camera module shown in FIGS. 2 and 3 and a reference point of a test chart, for adhesive agent curing tilting correction;
FIG. 12 is a view for describing a process of measuring a test chart using an image sensor of the apparatus for aligning lens optical axes of a camera module and assembling the camera module shown in FIGS. 2 and 3 and determining whether a defect of the camera module is generated, for adhesive agent curing tilting correction; and
FIG. 13 is a flowchart showing a method for aligning lens optical axes of a camera module and assembling the camera module according to an embodiment of the present invention, for adhesive agent curing tilting correction;
FIGS. 14 to 17 are views for describing a process of installing a lens barrel to a lens holder; and
FIG. 18 is a flowchart showing a method for aligning lens optical axes of a camera module and assembling the camera module according to another embodiment of the present invention, for adhesive agent curing tilting correction.

### [Modes of the Invention]

Hereinafter, preferred embodiments according to the present invention will be described with reference to the accompanying drawings. However, the embodiments of the present invention can be modified in many different forms, and the scope of the present invention is not limited to the embodiments described below. In addition, the embodiments of the present invention are provided to more completely explain the present invention to those skilled in the art. In the specification and the drawings, the same reference numerals will be given to the components having substantially the same functional configurations, repetitive description thereof will be omitted, and the shape, size, etc. of the components shown in the drawings may be exaggerated for more clear explanation. In the following descriptions of possible embodiments operable from the invention, when some of the components and features of the present invention are known and description thereof obscures the subject matter of the present invention, the corresponding detailed description will be omitted, and a specific embodiment illustrated in the drawings will be mainly described.

Hereinafter, embodiments of the present invention will be described in detail with reference to the accompanying drawings.

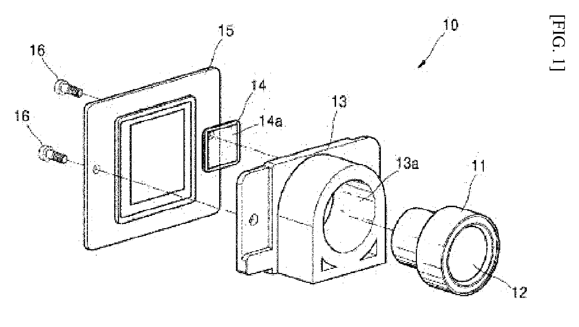

The present invention relates to an apparatus for aligning lens optical axes of a camera module and assembling the camera module which assembles a camera module 10 shown in FIG. 1 and a method for aligning lens optical axes of a camera module and assembling the camera module using the same.

The camera module 10 includes a substrate 15 to which an image sensor 14 is attached, a lens holder 13, and a lens barrel 11.

Preferably, the substrate 15 is a substrate which is wired to transmit signals, data, information, and so on. The lens holder 13 is fastened to the substrate 15, and the lens barrel 11 on which a lens 12 is mounted is coupled to the lens holder 13.

The focal point of the lens may be formed on a precise position of the image sensor when the optical axes of the camera module 10 assembled in this manner are aligned well, but in contrast, the focal point of the lens may be formed on an incorrect position when an error occurs in the alignment of the optical axes.

The causes of the occurrence of the error in the optical axis alignment include the following three kinds of tilting.

A first cause is 'image sensor attachment tilting' which can occur when the image sensor 14 is attached to the substrate 15 using a conductive adhesive agent.

A second cause is 'lens barrel coupling tilting' which can occur when the lens barrel 11 is coupled to the lens holder 13 fastened to the substrate 15 on which the image sensor 14 is installed.

A third cause is 'adhesive agent curing tilting' which can occur when the adhesive agent between the lens holder 13 and the lens barrel 11 is cured by heating.

Subsequently, the overall configuration of the apparatus for aligning the lens optical axes of the camera module and assembling the camera module which assembles the camera module while correcting the error in the optical axis alignment will be described.

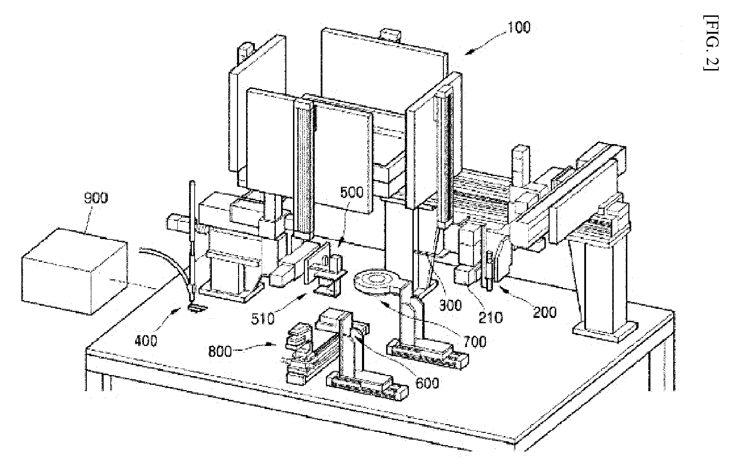

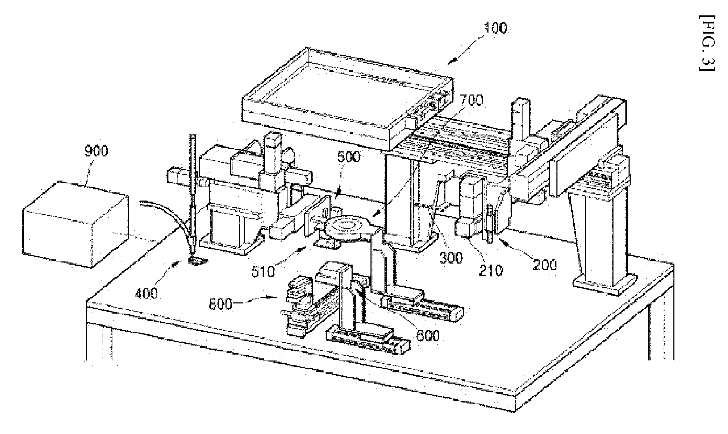

FIGS. 2 and 3 are views showing the overall configuration of an apparatus for aligning lens optical axes of a camera module and assembling the camera module according to an embodiment of the present invention. Here, FIG. 2 shows a case in which a fisheye lens is mounted on the camera module 10, and FIG. 3 shows a case in which a normal lens is mounted on the camera module 10.

Reference numeral '100' indicates a test chart system to be test-photographed by the image sensor 14. A test chart having a test pattern to be detected by the image sensor 14 is installed at the test chart system 100.

Reference numeral '200' indicates a displacement sensor that detects a tilted state of a subject to generate various pieces of tilt information. The displacement sensor 200 can detect a tilted state of the camera module 10, the image sensor 14, an end portion of the lens barrel 11, and the like, to generate the tilt information. Preferably, as a non-contact sensor, the displacement sensor 200 is a confocal displacement sensor that precisely measures displacement of the subject using light of a wavelength range. However, the displacement sensor 200 may be implemented with a two-dimensional or three-dimensional displacement sensor that measures the displacement while moving along the entire line or surface at a predetermined speed.

Reference numeral '300' indicates a lens clamper that clamps the lens barrel (11, see FIG. 1) inserted and coupled into the lens holder 13 and adjusts the position while moving the lens barrel 11 on a coupling surface of the lens holder 13 by a small distance, and reference numeral '210' indicates a vision camera that determines an amount of horizontal shift of the image sensor 14, and the like.

Reference numeral '400' indicates a bolt fastener. The bolt fastener fastens the lens holder 13 to the substrate 15.

Reference numeral '500' indicates a dispenser that applies an adhesive agent to one surface of the lens holder 13 to couple the lens barrel 11 to the lens holder 13. Reference numeral '510' indicates a UV irradiator that irradiates the adhesive agent with ultraviolet rays to cure the adhesive agent.

Reference numeral '600' indicates an LED illuminator that illuminates the camera module 10 mounted on a support block 800 for an easy visual inspection of the lens 12 for contaminations or cracks. In addition, by using the LED illuminator 600, tests of shading and an optical axis and a visual inspection become possible.

Reference numeral '700' indicates a collimator lens that reduces the focal distance of the lens 12 for optimally focusing on a pattern 101 of a test chart system installed near the camera module 10.

Reference numeral '800' indicates a support block on which an assembled object is mounted. Tilting of the support block 800 can be adjusted.

Reference numeral '900' indicates a controller that controls the entire components of the present invention.

A method for aligning lens optical axes of a camera module and assembling the camera module to correct the above-described three kinds of tilting that causes deviation of the optical axes using the apparatus for aligning the lens optical axes of the camera module and assembling the camera module of the present invention will be subsequently described.

### (Image Sensor Attachment Tilting Correction)

First, when the image sensor attachment tilting is generated, the optical axis with respect to the center of the image sensor 14 is tilted so that the center of the lens 12 deviates from the center of the image sensor 14 when the lens holder 13 and the lens barrel 11 are installed with respect to a vertical line of the center.

Functions of the main components in the apparatus for aligning the lens optical axes of the camera module and assembling the camera module for a correction of such 'image sensor attachment tilting' will be described below with reference to FIGS. 2 and 3.

The support block 800 supports the substrate 15 to which the image sensor 14 is attached. The displacement sensor 200 detects the tilted state of the image sensor 14 to generate sensor tilt information. The lens holder 13 is fastened to the substrate 15 by means of three or more bolts 16. The bolt fastener 400 is driven to tighten the three or more bolts 16 to fasten the lens holder 13 to the substrate 15. The controller 900 controls the bolt fastener 400. At this point, the support block 800 can adjust the tilting.

In other words, the substrate 15 to which the image sensor 14 is attached is placed on the support block 800. The tilted state of the image sensor 14 is detected to generate the sensor tilt information by the displacement sensor 200. At this point, in order to correct the tilted state of image sensor 14, the controller 900 is controlled by the sensor tilt information to control the bolt fastener 400 while controlling an axis of the support block 800. Thus, the lens holder 13 is fastened to the substrate 15 accordingly.

A process of aligning the lens optical axes and assembling the camera module using the apparatus for aligning the lens optical axes of the camera module and assembling the camera module according to the present invention will be described below.

First, the substrate 15 to which the image sensor 14 is attached is mounted on the support block 800. The substrate 15 may be mounted in automatic or manual manner. Here, the center of the image sensor 14 of the substrate 15 may be slightly tilted, and the tilted state is measured by the displacement sensor 200.

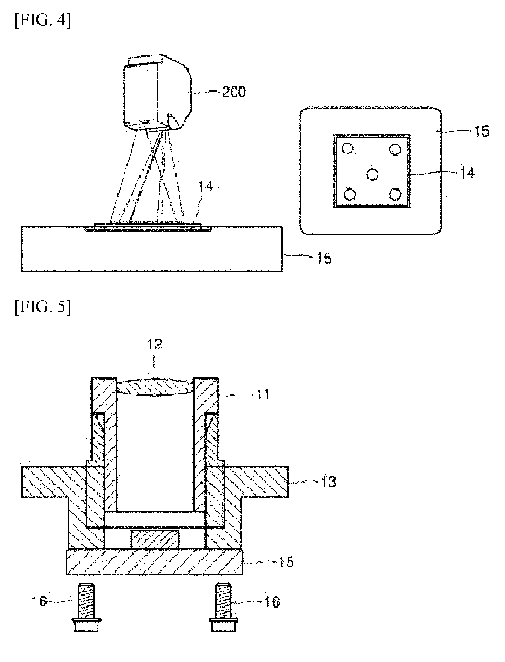

In other words, as shown in FIG. 4, the displacement sensor 200 moves above the support block 800 to measure flatness of five or more points of the image sensor 14, and the controller 900 determines the tilted state of the image sensor 14 from the measurement information.

When the tilted state of the image sensor 14 is determined in this manner, a process of fastening the lens holder 13 is performed in consideration of the tilted state. That is, the controller 900 controls the bolt fastener 400 to appropriately fasten or loosen the bolts 16. The controller 900 may control the bolt fastener 400 while adjusting the tilting by control of the axis of the support block 800 according to the sensor tilt information, so that the bolt 16 is appropriately tightened to fasten the lens holder 13 to the substrate 15.

Here, as shown in FIG. 5, the bolts 16 are fastened at least three places, and tightening levels of the bolts 16 are varied to correct the tilted state of the image sensor 14. In other words, when the tightening levels of the bolts 16 are varied, gaps between the lens holder 13 and the substrate 15 may become slightly different for different areas such that a relatively more strongly tightened area and a relatively less strongly tightened area are created, and therefore the tilted state of the optical axis can be corrected when the tightening level is adjusted by reflecting the tilted state of the image sensor 14 measured by the displacement sensor 200.

Subsequently, lens barrel coupling tilting correction will be described below.

### (Lens Barrel Coupling Tilting Correction)

Correcting the lens barrel coupling tilting by means of the apparatus for aligning the optical axes of the lenses and assembling the camera module of the present invention will be described below.

Functions of the main components in the apparatus for aligning the lens optical axes of the camera module and assembling the camera module for correction of the 'lens barrel coupling tilting' will be described below with reference to FIGS. 2 and 3.

The image sensor 14 is installed and the substrate 15 to which the lens holder 13 is fastened is set at the support block 800. Here, the support block 800 can adjust tilting, rotation and shift. The lens holder 13 is fastened to the substrate 15 such that an active region 14a of the image sensor 14 is exposed through a holder hole 13a.

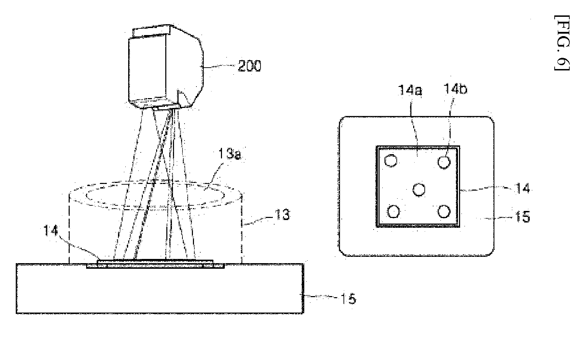

As shown in FIG. 6, the displacement sensor 200 detects the tilted state of the image sensor 14 installed at the substrate 15 to generate the sensor tilt information.

At this point, the displacement sensor 200 measures displacements of a plurality of points 14b on the active region 14a in which an actual image is photographed by the image sensor 14 to detect the tilted state of the image sensor 14.

In order to correct the tilted state of the image sensor 14, the controller 900 is driven to preferably automatically control the support block 800 to ultimately tilt the image sensor 14 according to the sensor tilt information.

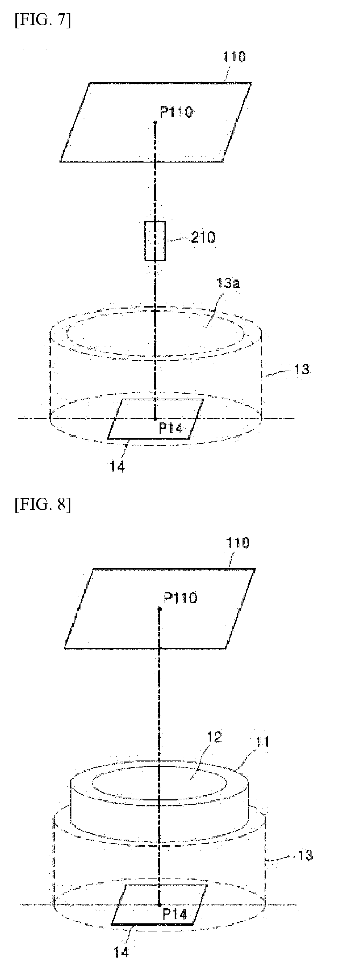

As shown in FIG. 7, the vision camera 210 checks a 'vision image' through the holder hole 13a of the lens holder 13. Here, the 'vision image' is an image of the image sensor 14.

In this case, the controller 900 is driven to preferably automatically shift the support block 800 (ultimately, the image sensor 14) or a test chart 110 according to the 'vision image' checked by the vision camera 210 to match a reference point (P14, see FIG. 7) of the image sensor 14 and a reference point (P110, see FIG. 7) of the test chart.

At this point, the reference point P14 of the image sensor 14 is the center point of the image sensor 14, and the reference point P110 of the test chart 110 is the center point of the test chart 110.

The lens clamper 300 clamps and moves the lens barrel 11 in which the lens 12 is installed. The lens clamper 300 may be controlled by the controller 900.

In other words, as shown in FIG. 8, with the lens barrel 11 is fastened to the lens holder 13, a 'lens image' serving as an image of the test chart 110 that is detected by the image sensor 14 through the lens 12 is generated.

In this case, the controller 900 is driven to automatically control the lens barrel 11 in accordance with the 'lens image' to match the center point of the lens 12 with the reference point P14 of the image sensor 14.

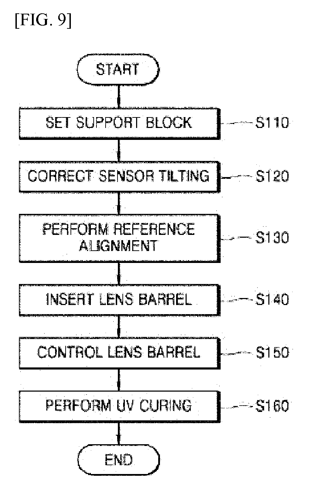

FIG. 9 is a flowchart showing a method for aligning lens optical axes of a camera module and assembling the camera module according to an embodiment of the present invention for correction of 'lens barrel coupling tilting'.

Referring to FIG. 9, the method for aligning lens optical axes of a camera module and assembling the camera module according to an embodiment of the present invention for correction of 'lens barrel coupling tilting' includes a support block setting step (S110) and a tilting correction step (S120) and preferably further includes a reference alignment step (S130), a lens barrel insertion step (S140), and a lens barrel control step (S150).

In the support block setting step (S110), the image sensor 14 is installed, and the substrate 15 to which the lens holder 13 is fastened is set to the support block 800. At this point, as described above, the lens holder 13 is fastened to the substrate 15 such that the active region 14a of the image sensor 14 is exposed through the holder hole 13a.

In the sensor tilting correction step (S120), the plurality of points 14 of the active region 14a of the image sensor 14 are measured by the displacement sensor 200 to generate the sensor tilt information. In order to correct the tilting of the image sensor 14, the controller 900 is driven to control the support block 800 according to the sensor tilt information.

In the reference alignment step S130, in order to match the reference point P110 of the test chart 110 and the reference point P14 of the image sensor 14, the controller 900 is controlled to shift the support block 800 or the test chart 110 according to the 'vision image'. As mentioned above, the 'vision image' is an image of the image sensor 14 checked by the vision camera 210.

It is preferable that the reference point P14 of the image sensor 14 be the center point of the image sensor 14 and the reference point P110 of the test chart 110 be the center point of the test chart 110.

In the lens barrel insertion step (S140), the lens barrel 11 in which the lens 12 is installed is inserted into the lens holder 13 to which an adhesive agent has been applied.

Next, in the lens barrel control step (S150) which is performed after the reference alignment step (S130) and the lens barrel insertion step (S140), in order to align the center of the lens 12 to the reference point P14 of the image sensor 14, the controller 900 is driven to control the lens barrel 11 according to the 'lens image'. As mentioned above, the 'lens image' is an image of the test chart 110 detected by the image sensor 14 through the lens 12.

Next, in the UV curing step (S160), after the center of the lens 12 is aligned to the reference point P14 of the image sensor 14, the adhesive agent is irradiated with ultraviolet rays to be partially cured.

When the camera module 10 is assembled by the above-mentioned process, the 'lens barrel coupling tilting' is compensated for tilting, and the optical axis between the lens 12 and the image sensor 14 can be rapidly and accurately aligned.

Subsequently, adhesive agent curing tilting correction will be described below.

### (Adhesive Agent Curing Tilting Correction)

The 'adhesive agent curing tilting' can be caused when the adhesive agent between the lens holder 13 and the lens barrel 11 is cured by heating in order to couple the lens barrel 11 to the lens holder 13. That is, the optical axis of the lens 12 may ultimately deviate due to non-uniformity of thickness of the cured adhesive agent.

Functions of the main components in the apparatus for aligning the lens optical axes of the camera module and assembling the camera module for correction of such "adhesive agent curing tilting' will be described below with reference to FIGS. 2 and 3.

The camera module 10 is set to the support block 800. The camera module 10 includes the substrate 15 on which the image sensor 14 is installed, the lens barrel 11 in which the lens 12 is installed, and the lens holder 13 coupled between the substrate 15 and the lens barrel 11.

The lens holder 13 is fastened to the substrate 15 such that the active region 14a of the image sensor 14 is exposed through the holder hole 13a.

Next, the lens barrel 11 is coupled to the lens holder 13 by the adhesive agent cured by heating.

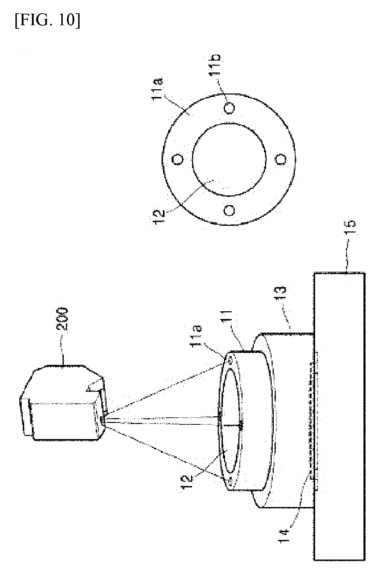

As shown in FIG. 10, the displacement sensor 200 detects the tilted state of the lens barrel 11 to generate a barrel tilting information after the adhesive agent is heated.

At this point, the displacement sensor 200 measures displacements of a plurality of points 11b on a surface of an end portion 11a of the lens barrel 11 near the displacement sensor 200 to detect the tilted state of the lens barrel 11.

The controller 900 is driven to preferably automatically control the support block 800 according to the barrel tilting information to tilt the lens barrel 11 so as to correct the tilted state of the lens barrel 11 after the heating of the adhesive agent.

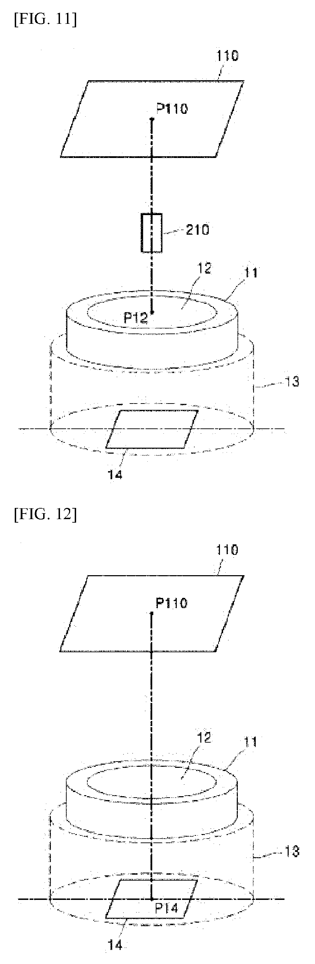

As shown in FIG. 11, the vision camera 210 checks the 'heating vision image' through the lens 12 after the adhesive agent is heated. Here, the 'heating vision image' is an image of the lens 12 after the adhesive agent is heated.

In this case, the controller 900 is driven to preferably automatically shift the support block 800 (ultimately, the lens 12) or the test chart 110 according to 'the heating vision image' checked by the vision camera 210 so as to match a reference point P12 of the lens and the reference point P110 of the test chart 110.

Here, the reference point P12 of the lens 12 is the center point of the lens 12, and the reference point P110 of the test chart 110 is the center point of the test chart 110.

As shown in FIG. 12, the image sensor 14 checks a 'determination image' through the lens 12 after the adhesive agent is heated. Here, the 'determination image' is an image of the test chart 110 detected by the image sensor 14 through the lens 12 after the adhesive agent is heated.

In this case, the controller 900 determines whether misalignment of the optical axis of the camera module 10 is generated via the 'determination image'.

At this point, whether misalignment of the optical axis of the camera module 10 is generated may be determined by comparing the 'determination image' with a predetermined reference image. In another example, whether a misalignment of the optical axis of the camera module 10 is generated may be determined by comparing optical axis measurement values of the 'determination image' with predetermined optical axis reference values, or it may be determined by other various methods.

Subsequently, the method for aligning the lens optical axes of the camera module and assembling the camera module of the present invention to correct 'adhesive agent curing tilting' will be described. For reference, the method for aligning the lens optical axes of the camera module and assembling the camera module of the present invention to correct 'adhesive agent curing tilting' may be performed by a determination of whether a defect of the camera module is generated.

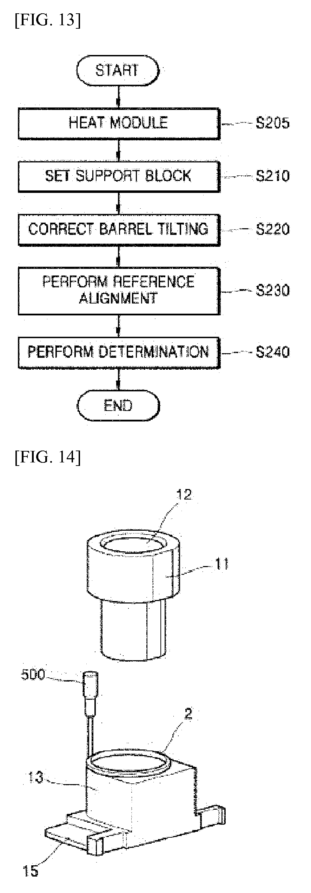

FIG. 13 is a flowchart showing a method for aligning lens optical axes of a camera module and assembling the camera module according to an embodiment of the present invention for adhesive agent curing tilting correction.

Referring to FIG. 13, in a module heating step (S205), the camera module 10 is heated. The camera module 10 includes the substrate 15 on which the image sensor 14 is installed, the lens barrel 11 in which the lens 12 is installed, and the lens holder 13 coupled between the substrate 15 and the lens barrel 11. Here, the lens holder 13 is fastened to the substrate 15 such that the active region 14a of the image sensor 14 is exposed through the holder hole 13a, and the lens barrel 11 is coupled to the lens holder 13 using an adhesive agent 2 cured by the heating.

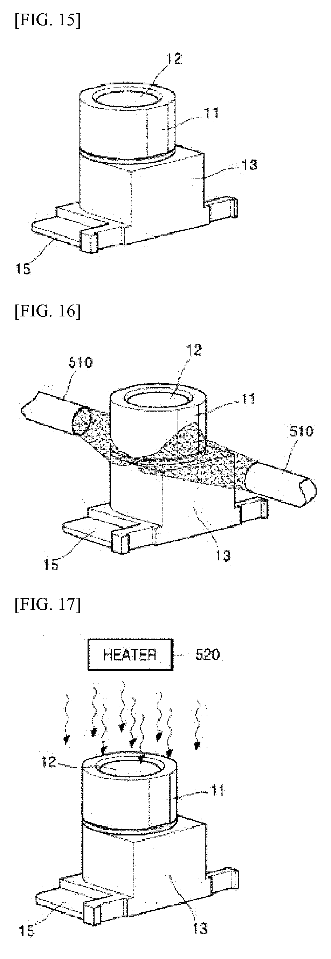

Specifically, as shown in FIG. 14, the dispenser 500 is operated to apply the adhesive agent 2 to one surface of the lens holder 13. Then, as shown in FIG. 15, the lens barrel 11 is inserted and coupled to an adhesion surface of the lens holder 13. At this point, the operation of inserting the lens barrel 11 into the lens holder 13 may be performed in an automatic or manual manner. The test chart system 100 is operated such that the test pattern is directly photographed by the image sensor 14 after the lens barrel 11 is inserted.

When it is determined during the photographing of the test pattern that the optical axes are not properly aligned, the lens barrel 11 is clamped by the lens clamper 300 to be moved on the coupling surface of the lens holder 13 by a small distance to adjust a tilting error. Then, as shown in FIG. 16, the UV irradiator 510 irradiates the adhesive agent 2 with ultraviolet rays for initially or partially curing the adhesive agent 2.

After the lens barrel 11 is coupled as described above, the surface of the lens 12 is visually checked by turning on the LED illuminator 600. The LED illuminator 600 can also perform a test of the optical axis while checking for surface defects of the lens 12 such as shading, defects, stains, and the like.

Next, the test chart system 100 is operated, and the test pattern is directly photographed by the image sensor 14.

After completion of the adjustment in this manner, as shown in FIG. 17, the camera module 10 is heated by a heater 520 to completely cure the adhesive agent 2 between the lens holder 13 and the lens barrel 11.

In the support block setting step (S210), the heated camera module 10 is set at the support block 800.

In the barrel tilting correction step (S220), the tilting of the lens barrel 11 of the heated camera module 10 is corrected.

In the barrel tilting correction step (S220), the plurality of points 11b on the end portion 11a of the lens barrel 11 near the displacement sensor 200 are measured by the displacement sensor 200 to generate 'barrel tilting information'. In order to correct the tilting of the lens barrel 11, the controller 900 is driven to control the support block 800 according to the barrel tilting information.

In the reference alignment step (S230), in order to match the reference point P110 of the test chart 110 and the reference point P12 of the lens 12, the controller 900 is controlled to shift the support block 800 or the test chart 110 according to the 'heating vision image'.

In addition, it is preferable that the reference point P12 of the lens 12 be the center point of the lens 12, and the reference point P110 of the test chart 110 be the center point of the test chart 110.

In the determination step (S240) performed after the reference alignment step (S230) is performed, the controller 900 determines via the 'determination image' whether misalignment of the optical axis of the camera module 10 is generated. At this point, the 'determination image' is an image of the test chart 110 detected by the image sensor 14.

Whether the tilting error of the lens 12 has been adjusted under the control of the controller 900 and the lenses have finally been precisely aligned is checked again by the above-mentioned process so that the optical axes between the lens 12 and the image sensor 14 can be rapidly and precisely aligned.

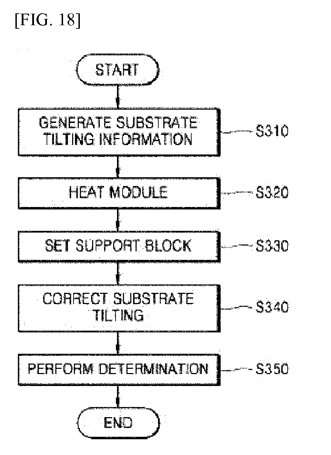

In addition, adhesive agent curing tilting correction may be performed by a method for aligning lens optical axes of a camera module and assembling the camera module according to another embodiment of the present invention as shown in FIG. 18.

Referring to FIG. 18, before heating the camera module 10, a substrate tilting information generating step (S310) is performed by measuring a plurality of points on the substrate 15 using the displacement sensor 200 to generate substrate tilting information. Here, the camera module 10 includes the substrate 15 on which the image sensor 14 is installed, the lens barrel 11 in which the lens 12 is installed, and the lens holder 13 coupled between the substrate 15 and the lens barrel 11. Here, the lens holder 13 is fastened to the substrate 15 such that the active region 14a of the image sensor 14 is exposed through the holder hole 13a, and the lens barrel 11 is coupled to the lens holder 13 using the adhesive agent 2 cured by the heater.

In the module heating step (S320), in order to couple the lens barrel 11 to the lens holder 13 using the adhesive agent 2 cured by the heater, the camera module 10 is heated.

In the support block setting step (S330), the heated camera module 10 is set to the support block 800.

In the substrate tilting correction step (S340), the controller 900 is driven to control the support block 800 according to the 'substrate tilting information'.

In the determination step (S350) performed after the substrate tilting correction step (S340) is performed, the controller 900 determines whether misalignment of the optical axis of the camera module 10 is generated via a 'determination image'. Here, the "determination image" is an image of the test chart 110 detected by the image sensor 14.

Whether the tilting error of the lens 12 is adjusted under the control of the controller 900 and the lenses have finally been precisely aligned is checked again by the above-mentioned process so that the optical axes between the lens 12 and the image sensor 14 can be rapidly and precisely aligned.

The invention has been described with reference to an exemplary embodiment illustrated in the drawings, but has been merely exemplified. It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

### [Industrial applicability]

The present invention is available in lens fields of the camera module.

## Claims

1. An apparatus for aligning lens optical axes of a camera module and assembling the camera module, comprising:
a support block configured to support a substrate on which an image sensor is installed;
a displacement sensor configured to detect a tilted state of the image sensor to generate sensor tilt information;
a lens holder configured to be fastened to the substrate by means of three or more bolts;
a bolt fastener configured to be driven to tighten the three or more bolts to fasten the lens holder to the substrate; and
a controller configured to control the bolt fastener,
wherein the controller is controlled according to the sensor tilt information to control the bolt fastener to tighten the three or more bolts with different tightening levels while controlling an axis of the support block in order to correct the tilted state of the image sensor.

2. The apparatus for aligning lens optical axes of a camera module and assembling the camera module according to claim 1, further comprising:
a dispenser configured to apply an adhesive agent to one surface of the lens holder for attaching a lens barrel in which the lens is mounted to the lens holder.

3. The apparatus for aligning lens optical axes of a camera module and assembling the camera module according to claim 2, further comprising:
a lens clamper configured to clamp and move the lens barrel on an adhesion surface of the lens holder to which the adhesive agent has been applied.

4. The apparatus for aligning lens optical axes of a camera module and assembling the camera module according to claim 2, further comprising:
a UV irradiator configured to irradiate the adhesive agent with ultraviolet rays to cure the adhesive agent.

5. The apparatus for aligning lens optical axes of a camera module and assembling the camera module according to claim 2, further comprising:
an LED illuminator configured to provide uniform illumination for visually inspecting the lens.

6. The apparatus for aligning lens optical axes of a camera module and assembling the camera module according to claim 5, wherein the LED illuminator enables determination of whether a surface defect of the lens is present and inspection of the optical axis.

7. The apparatus for aligning lens optical axes of a camera module and assembling the camera module according to claim 2, further comprising:
a test chart system having a test pattern to be detected by the image sensor through the lens.

8. The apparatus for aligning lens optical axes of a camera module and assembling the camera module according to claim 7, further comprising:
a collimator lens disposed between the lens and the test chart system to reduce a focal distance of the lens.

9. A method for aligning lens optical axes of a camera module and assembling the camera module, comprising:
setting a substrate on which an image sensor is installed and to which a lens holder is fastened at a support block, wherein the lens holder is fastened to the substrate such that an active region of the image sensor is exposed through a holder hole;
measuring a plurality of points of the active region of the image sensor exposed through the holder hole using a displacement sensor to generate sensor tilting information for correcting tilting of the image sensor, wherein a controller controls the support block according to the sensor tilting information;
inserting a lens barrel in which the lens is installed to the lens holder to which an adhesive agent has been applied after the measuring; and
controlling the lens barrel to align the center of the lens with a reference point of the image sensor after the inserting, wherein the controller is driven to control the lens barrel according to the lens image and the lens image is an image of a test chart detected by the image sensor through the lens.

10. The method for aligning lens optical axes of a camera module and assembling the camera module according to claim 9, further comprising:
aligning references to match a reference point of the test chart and the reference point of the image sensor after the measuring and before the inserting, wherein the controller is driven to shift the support block or the test chart according to a vision image, and the vision image is an image of the image sensor determined by a vision camera.

11. The method for aligning lens optical axes of a camera module and assembling the camera module according to claim 10, wherein the reference point of the image sensor is the center point of the image sensor, and the reference point of the test chart is the center point of the test chart.

12. A method for aligning lens optical axes of a camera module and assembling the camera module, comprising:
heating a camera module, wherein the camera module includes a substrate on which an image sensor is installed, a lens barrel in which a lens is installed, and a lens holder coupled between the substrate and the lens barrel, and the lens barrel is coupled to the lens holder using an adhesive agent cured by heating;
setting the heated camera module at the support block;
measuring a plurality of points on an end portion of the lens barrel of the heated camera module using a displacement sensor to generate barrel tilting information, wherein the controller is driven to control the support block according to the barrel tilting information; and
determining, by the controller, whether a misalignment of an optical axis of the camera module is generated via a determination image after the measuring, wherein the determination image is an image of a test chart detected by the image sensor.

13. The method for aligning lens optical axes of a camera module and assembling the camera module according to claim 12, further comprising:
aligning references to match a reference point of the test chart and a reference point of the image sensor after the measuring and before the determining, wherein the controller is driven to shift the support block or the test chart according to a heating vision image, and the heating vision image is an image of the lens after the adhesive agent determined by a vision camera is heated.

14. The method for aligning lens optical axes of a camera module and assembling the camera module according to claim 13, wherein a reference point of the lens is the center point of the lens, and the reference point of the test chart is the center point of the test chart.

15. The method for aligning lens optical axes of a camera module and assembling the camera module according to claim 12, wherein the displacement sensor is a confocal displacement sensor.

16. A method for aligning lens optical axes of a camera module and assembling the camera module, comprising:
measuring a plurality of points on a substrate of a camera module using a displacement sensor to generate substrate tilting information, wherein the camera module includes the substrate on which an image sensor is installed, a lens barrel in which a lens is installed, and a lens holder coupled between the substrate and the lens barrel, and the lens barrel is coupled to the lens holder using an adhesive agent cured by heating;
heating the camera module;
setting the heated camera module at a support block;
correcting substrate tilting, wherein a controller is driven to control the support block according to the substrate tilting information; and
determining, by the controller, whether a misalignment of an optical axis of the camera module is generated via a determination image after the correcting, wherein the determination image is an image of a test chart detected by the image sensor.

17. A camera module manufactured by any one of the methods of claims 9 to 16.
